Europäisches Patentamt

European Patent Office

Office européen des brevets

(11) Publication number: 0 200 983
A2

# (12) EUROPEAN PATENT APPLICATION

(21) Application number: 86105513.5

(22) Date of filing: 14.06.82

(51) Int. Cl.⁴: **C 04 B 41/80,** H 05 B 7/085, B 05 B 7/00, B 05 B 13/04

(30) Priority: 26.06.81 GB 8119714
20.03.82 GB 8208226

(43) Date of publication of application: 12.11.86
Bulletin 86/46

(84) Designated Contracting States: AT BE CH DE FR GB IT LI LU NL SE

(60) Publication number of the earlier application in accordance with Art. 76 EPC: 0070100

(71) Applicant: FOSECO INTERNATIONAL LIMITED, 285 Long Acre, Nechells Birmingham B7 5JR (GB)

(72) Inventor: Dunkelmann, Dietger, Petersfeldstrasse 4, Bocholt (DE)
Inventor: Jaunich, Helmut, Sudring 26, D-4281 Raesfeld (DE)
Inventor: Schiffarth, Josef, Winterswijker Strasse 81, D-4290 Bocholt-Barlo (DE)

(74) Representative: Warman, Charles Alfred, Group Patents Department Foseco Minsep International Limited 285 Long Acre, Nechells Birmingham B7 5JR (GB)

(54) Protection of graphite electrodes.

(57) Apparatus for protection of graphite electrodes of electric arc furnaces e.g. for steelmaking to reduce loss of graphite from sides of the electrode by oxidation has at least one generally arcuate spray unit (6, 7) with means (8–12) for moving the spray unit towards and away from a side of the electrode. The spray unit has means for spraying protective matter towards the centre of its arc. The apparatus permits protection of the part of an electrode between the electrode clamp and furnace roof without removing the electrode from the roof.

EP 0 200 983 A2

ACTORUM AG

FS 1215 Cog.
Divisional

- 1 -

## PROTECTION OF GRAPHITE ELECTRODES

The invention concerns protection of graphite electrodes from oxidation, and in particular, concerns apparatus for protecting graphite electrodes for electric arc furnaces.

Graphite electrodes are used in the electric arc steelmaking process and during the process substantial loss of graphite from the electrodes occurs not only from the tip of the electrode i.e. in the arc zone but also to a considerable extent from the side of the electrode by oxidation.

Graphite for electrodes for electric arc steelmaking furnaces is expensive and over many years there have been numerous proposals to provide protective matter on the side of the electrode to reduce loss of graphite by oxidation. None of the known processes is ideal : one difficulty is that the protective matter may interfere with electrical contact between the electrode and the clamp used to supply electric current to the electrode, another difficulty is that the protective matter may not adhere well to the electrode under the conditions of use and yet another difficulty is that application of the protective matter may be troublesome and impractical to effect at sufficiently frequent intervals.

According to the present invention, apparatus for applying protective matter to the side of a graphite electrode for an electric arc furnace to reduce loss of graphite from the electrode by oxidation during use is provided which comprises a generally arcuate spray unit adapted to be advanced towards a side of the electrode to a position, adjacent a side of the electrode, where the centre of the arc is generally coincident with the axis of the electrode, the spray unit having means for spraying matter for the protection of the electrode generally towards the centre of the arc, and means for moving the spray unit towards and away from a side of the electrode.

For the charging of electric arc steelmaking furnaces after a period of use the electrodes are raised  and the furnace roof is swung aside. At this stage usually the clamps are left in their positions near the top of the electrodes and the hot electrodes are not wholly removed from the furnace roof.  The apparatus of the invention enables protective matter satisfactorily to be applied to the side of an electrode in this condition : as the arcuate spray unit can be advanced towards a side of the electrode, the necessary access can be obtained despite the presence of the clamp near the top of the electrode and the fact that part of the electrode is within the furnace roof.

The apparatus is used to apply the protective matter to the side of the electrode between the clamp and the top of the furnace roof. Rather than the apparatus being adapted to apply the protective matter to the entire length of electrode in question at the same time, it is preferred that the apparatus should include means for raising and lowering the spray unit so that the protective matter can be applied sequentially to different levels of the length. By this means the apparatus can be made more compact.

During the use of the electrode, graphite is inevitably lost from the tip of the electrode and this is compensated for by lowering the electrode further into the furnace, correspondingly moving the clamp further up the electrode and periodically joining a new length of electrode to the top of the existing electrode. If the repositioning of the clamp and lowering of the electrode is carred out whilst the electrode remains in the furnace, the part of the electrode below the new position of the clamp can then be coated as before. Likewise, at any time when a hot electrode is removed from the furnace, a further coating can be applied and, if the clamp is repositioned at that time, a previously uncoated part of the electrode can then be coated.

It is preferred that the apparatus should comprise two or more of the arcuate spray units adapted together to enable the protective matter to be simultaneously applied all the way round the electrode. This feature avoids the need for a single spray unit first to apply the protective matter to one part of the periphery of the electrode and then to be moved around the electrode to apply the matter to a further part of the electrode periphery.

In electric arc steelmaking furnaces there are three graphite electrodes and the distance between the electrodes is similar to the diameter of the electrodes. This means that access to the sides of the electrodes is very restricted.

In the apparatus of the invention it is particularly preferred that the spray unit or the units should be hingedly mounted on a support which is pivotally mounted on a movable support arm. By moving, e.g. extending or retracting and/or pivoting, the support arm, the spray unit(s) may be moved near the electrode in question and pivoting of the support arm enables the support to be brought to a position in relation to the electrode such that a hingeing movement of the spray unit(s) in relation to the support can serve to bring the centre of the arc of the or each spray unit into a position generally coincident with the axis of the electrode. By this means suitable access to each of the three electrodes can be achieved one by one despite the presence of the other two electrodes. The support arm may be movable up and down in order to provide means for raising and lowering the spray unit(s) as already mentioned.

The apparatus of the invention and its use is especially advantageous in that it enables protective matter to be applied to the electrode without requiring the electrode to be removed altogether from the furnace roof and without requiring the clamp to be removed from the electrode. Accordingly, advantage can be taken of the short periods when the hot electrodes are temporarily out of the furnace whilst the initial charge is added to the furnace after a period of use and discharge of the melt or while a further charge is being added to an already partly charged furnace. A charge can be added to the furnace in a short time and the furnace roof may be swung aside for, say, only two minutes. This time is deliberately kept as short as possible in order to minimise loss of production time. However, by use of the apparatus of the invention one or more of the electrodes can be given on each occasion a protective coating in a short time. Moreover, the electrodes can conveniently be coated relatively frequently and thus, before a coating has been completely consumed as a result of the conditions of use of the electrode, a new coating can be applied over substantially the same area of the electrode.

It is a particular advantage of the apparatus of the invention and its use that it neither requires a supply of especially treated or constructed electrodes nor does it interfere with the normal sequences of operations involved in operating the furnace.

The or each arcuate spray unit has one or more outlets e.g. nozzles for discharging the protective matter on to the electrode. The protective matter maybe either mechanically conveyed to the electrode without the use of a carrier gas stream or the protective matter maybe fed to a chamber where it is entrained in a carrier gas to form a stream having a high ratio of protective matter to carrier gas and the stream is then conveyed to the electrode. However, it is preferred to use a carrier gas stream to entrain and discharge the protective matter.

In the case of the procedure using a carrier gas it is preferred that the proportion of protective matter in the stream should be as high as is compatible with conveniently conveying the stream to the electrode as this reduces any tendency for the protective matter to rebound from the electrode.

Preferably the spray unit has a number of separate chambers from which the protective matter is discharged through separate outlets, one or more for each chamber. The or each chamber preferably has an inlet for pressurised gas to entrain the protective matter in the chamber and discharge it through the outlet(s). The gas inlet is preferably in the opposite side of the chamber to the outlet. Positioned above the or each chamber, there is preferably a hopper, for a supply of the protective matter, and the hopper communicates with the or each chamber. Preferably there is a separate hopper for each chamber.

The spray unit preferably has an aperture or apertures above and/or beneath the outlet or outlets for the protective matter, and these apertures are connected to a vacuum source or sources. By this means stray protective matter that would fail to reach the electrode or have rebounded from it can be recovered, for recycling, and contamination of the atmosphere and the furnace roof reduced.

Particulate materials for application to hot graphite electrodes to provide a coating to protect the graphite from oxidation are known. In the case of the present invention the material used preferably comprises a graphite-wetting fusible matrix material e.g. a boron compound such as boric oxide and a refractory filler e.g. silicon carbide. Preferably the material contains 30 to 45% by weight of the matrix material and 55 to 70% by weight of the filler. Also, it is preferred that all or most of the material should be in the form of particles containing both the essential ingredients. Moreover, the particles are preferably in the size range of 0.125 mm to 0.5 mm.

The apparatus of the present invention is now further described with reference to the accompanying diagrammatic drawings in which:

Figure 1 is a general elevation, partly in section, of apparatus of the invention and an arc furnace roof with clamped electrodes,

Figure 2 is a view from above of part of what is shown in Figure 1,

Figure 3 is a greatly enlarged view from above of part of what is shown in Figures 1 and 2,

Figure 4 is an enlarged section along line I-I in Figure 3 and

Figure 5 is a section along line II-II in Figure 4.

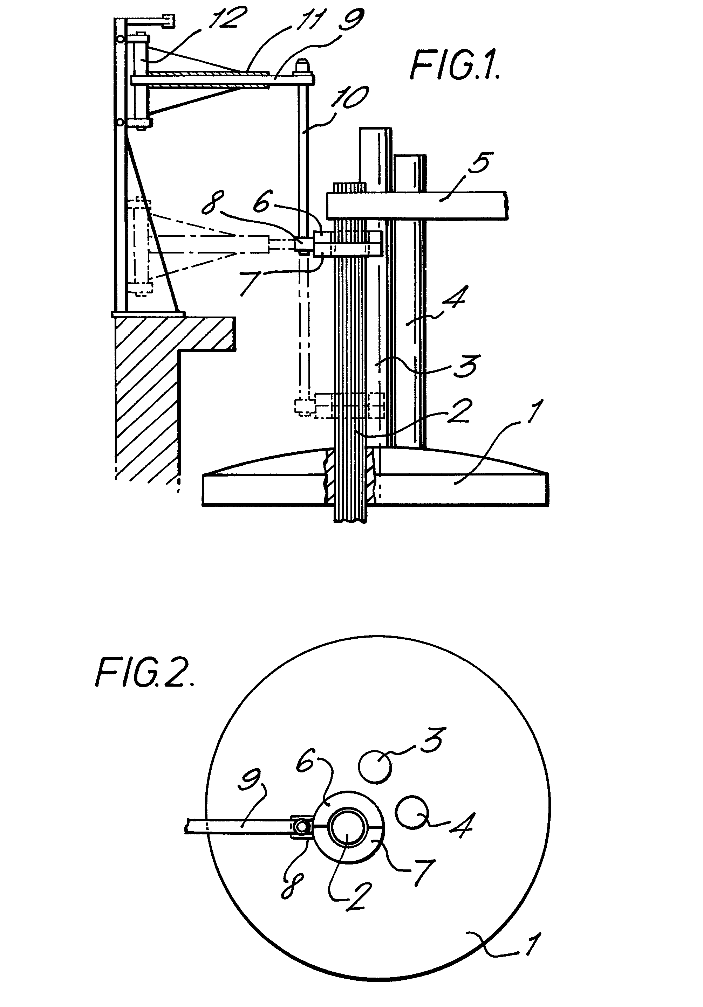

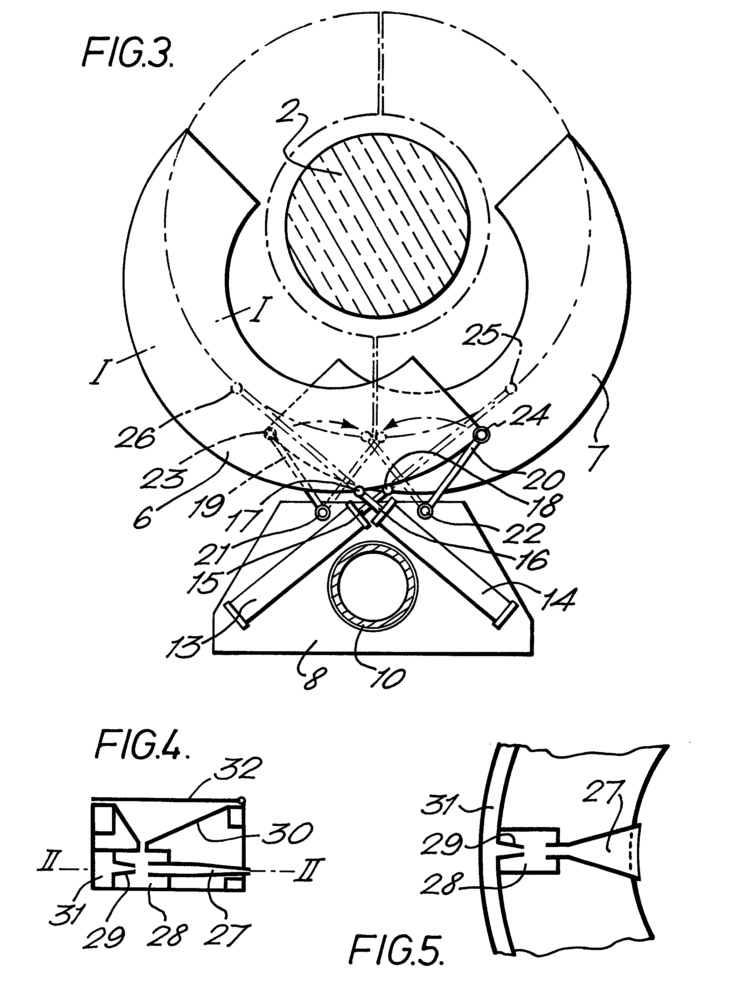

Referring now to Figures 1 and 2, electric arc steelmaking furnace roof 1 is shown swung aside from the furnace (not shown) with graphite electrodes 2, 3 and 4 raised relative to their operating positions but not wholly withdrawn from the roof. The clamps for the electrodes are in position although, for clarity, only the clamp for the electrode 2, clamp 5, is shown.

Adjacent to the electrodes is positioned apparatus of the invention comprising arcuate spray units 6 and 7 mounted on a support 8 which is pivotally mounted on support arm 9 by means of connecting tube 10. The support arm 9 is movable laterally within guide tube 11 and the guide tube is fixed to pivot axle 12 which is mounted to permit pivoting movement of the guide tube 11 and the support arm 9 in a horizontal plane. The mounting of the pivot axle 12 is such that the axle with the guide tube 11 and support arm 9 can be moved up and down in a vertical plane e.g. from the position shown in full lines in Figure 1 to that shown in dotted lines.

The support 8 and the mounting of this of the arcuate spray units are shown in greater detail in Figure 3. The support 8 carries pneumatic or hydraulic cylinders 13 and 14 having respective piston rods 15 and 16. The piston rods 15 and 16 are attached to the spray units 7 and 6 respectively by respective pivot joints 18 and 17. Arms 19 and 20 are attached at one end to the support 8 by respective pivot joints 21 and 22 and at the other end to the spray units 6 and 7 respective pivot joints 23 and 24. By use of the cylinders 13 and 14 the piston rods can be driven out to reach positions 25 and 26 respectively as a result of which the arcuate spray units 6 and 7 take up the positions shown in dotted lines in Figure 3 and the arms 19 and 20 pivot to the positions shown in dotted lines in the Figure.

Referring now to Figures 4 and 5, each of the spray units has six nozzles 27 of fishtail shape, each being the outlet for particulate matter entained in gas from a respective chamber 28. Each of the chambers 28 has an inlet nozzle 29 for gas under pressure and, mounted above each of the chambers and communicating with the chamber by a duct is a hopper 30 for a supply of particulate matter. For the supply of gas under pressure to all the chambers of each of the spray units a single duct 31 is present. The hoppers 30 are provided with a lid 32.

In use of the apparatus, the hoppers 30 are charged with particulate matter for providing a coating on a hot graphite electrode to protect it from oxidation. After the furnace roof 1 has been swung aside from the furnace to the position shown in Figure 1, the spray units are positioned as shown in Figure 1 by moving the connecting tube 10 to the position shown and by closing the previously open spray units 6 and 7 around the hot electrode 2 as described in connection with Figure 3.

The gas under pressure is then supplied to the duct 31 of each of the spray units. The pressurised gas enters each of the chambers through the nozzle 29 and entrains particulate matter entering the chamber from the hopper and the gas-entrained matter leaves the chambers through the nozzles 27. The particulate matter adheres to the hot electrode to form a coating to protect the graphite from oxidation. The mounting of the guide tube 11 is gradually moved downwards until the assembly reaches the position shown in dotted lines in Figure 1 and thus substantially all of

- 11 -

the side of the electrode between the clamp 5 and the top of the roof 1 is given the coating.  One or more further traverses may be carried out if desired to increase the amount of matter applied to the electrode.

When application of the particulate matter to the electrode is complete, the supply of gas under pressure is cut off and the spray units are removed from the electrode.  The other electrodes may then similarly be provided with a coating or this may be done on subsequent occasions when the roof is swung aside from the furnace and the electrodes are hot.

CLAIMS

1.        Apparatus for applying protective matter to the side of a graphite electrode for an electric arc furnace to reduce loss of graphite from the electrode by oxidation during use, characterised in that the apparatus comprises at least one generally arcuate spray unit (6, 7) adapted to be advanced towards a side of the electrode (2, 3, 4) to a position, adjacent a side of the electrode (2, 3, 4) where the centre of the arc is generally coincident with the axis of the electrode (2, 3, 4) said arcuate spray unit (6, 7) having means for spraying matter for the protection of the electrode (2, 3, 4) generally towards the centre of the arc and means for moving the said arcuate spray unit (6, 7) towards and away from a side of the electrode (2, 3, 4).

2.        Apparatus according to claim 1 characterised in that it incorporates means for raising and lowering the at least one arcuate spray unit (6, 7) for sequential application of the protective matter to the electrode (2, 3, 4) at different levels.

3.        Apparatus according to claim 1 or claim 2 characterised in that there are at least two arcuate spray units (6, 7) adapted together to be advanced towards the sides of the electrode (2, 3, 4) to enable the protective matter to the simultaneously applied all the way round the electrode (2, 3, 4).

4.        Apparatus according to any of claims
1 to 3 characterised in that the or each arcuate
spray unit (6, 7) is hingedly mounted on a support
(8) pivotally mounted on a movable supporting arm
(9) to permit movement of the arcuate spray unit
(6, 7) to a position near the electrode (2, 3, 4)
and pivoting of the support (8) relative to the
said supporting arm (9) enabling the support (8)
to be brought to a position relative to the
electrode (2, 3, 4) such that a hingeing movement
of the arcuate spray unit (6, 7) relative to the
support (8) can serve to bring the centre of the
arc of the arcuate spray unit (6, 7) into a
position generally coincident with the axis of
the electrode (2, 3, 4).

5.        Apparatus according to any of claims
1 to 4 characterised in that it incorporates means
for raising and lowering the at least one arcuate
spray unit (6, 7) for sequential application of
the protective matter to the electrode (2, 3, 4)
at different levels.

6.        Apparatus according to any of claims
1 to 5 characterised in that the or each arcuate
spray unit (6, 7) has at least one chamber (28)
from which the protective matter can be discharged
onto the electrode (2, 3, 4) via at least one
outlet (27) and a hopper (30) is located above
and in communication with said at least one
chamber (28) for supply of the protective matter
to said chamber (28).

7.       Apparatus according to claim 6 characterised in that there is a plurality of the chambers (28) and a separate hopper (30) located above and in communication with each of the chambers (28).

8.       Apparatus according to any of claims 1 to 7 characterised in that the or each arcuate spray unit (6, 7) has at least one outlet (27) for the discharge of the protective matter and adjacent to each of said outlets (27) there is an aperture connected to at least one vacuum source by means of which stray particles of the protective matter can be recovered.

FIG.1.

FIG.2.

0200983

FIG.3.

FIG.4.

FIG.5.